**Europäisches Patentamt**

**European Patent Office**

**Office européen des brevets**

(19)

(11) Veröffentlichungsnummer: **0 118 613**
**B1**

(12) **EUROPÄISCHE PATENTSCHRIFT**

(45) Veröffentlichungstag der Patentschrift:
**05.11.86**

(51) Int. Cl.⁴: **F 16 L 33/00, F 16 L 11/08**

(21) Anmeldenummer: **83112451.6**

(22) Anmeldetag: **10.12.83**

(54) **Schlauch zur Herstellung von Anschlussenden aufweisenden Schlauchstücken vorbestimmter Länge sowie Verfahren zur Herstellung des Schlauchs.**

(30) Priorität: **07.02.83 DE 3304079**

(43) Veröffentlichungstag der Anmeldung:
**19.09.84 Patentblatt 84/38**

(45) Bekanntmachung des Hinweises auf die Patenterteilung:
**05.11.86 Patentblatt 86/45**

(84) Benannte Vertragsstaaten:
**AT BE CH DE FR GB IT LI NL SE**

(56) Entgegenhaltungen:
**DE-C-2 654 377**
**DE-U-1 998 778**
**US-A-1 939 872**
**US-A-2 909 198**
**US-A-3 115 898**
**US-A-3 528 687**

(73) Patentinhaber: **Vohrer, Christoph, Hattsteiner Strasse 22, D-6240 Königstein 2 (DE)**

(72) Erfinder: **Vohrer, Christoph, Hattsteiner Strasse 22, D-6240 Königstein 2 (DE)**

(74) Vertreter: **Schubert, Siegmar, Dipl.- Ing., Patentanwälte Dr. V. Schmied- Kowarzik Dr. P. Weinhold Dr.- Ing. G. Dannenberg Dr. D. Gudel Dipl.- Ing. S. Schubert Dr. P. Barz Grosse Eschenheimer Strasse 39, D-6000 Frankfurt am Main 1 (DE)**

EP 0 118 613 B1

## Beschreibung

Die Erfindung betifft einen Schlauch zur Herstellung von Anschlußenden aufweisenden Schlauchstücken nach dem Oberbegriff des Anspruchs 1 oder 2.

Die Erfindung betrifft weiterhin ein aus diesem Schlauch hergestelltes Schlauchstück, insbesondere einen Brauseschlauch.

Weiterhin betrifft die Erfindung ein Verfahren zur Herstellung des Schlauchs.

Es sind Schläuche bzw. Schlauchstücke für Anwendungsfälle insbesondere als Brauseschläuche bekannt, bei denen es auf geringes Gewicht und leichte Biegsamkeit für eine bequeme Handhabung ankommt (DE-C-2 261 126, DE-A-30 18 417, 30 25 707 und 27 22 928). Derartige Schläuche sind aber insbesondere für unsachgemäße Handhabung nicht unbedingt robust genug, da der Innenschlauch und der Außenschlauch möglichst dünn gehalten werden, in der Regel mit Wandstärken von 0,3 - 0,5 mm, um das Gewicht gering und die Flexibilität groß zu halten. Hinsichtlich der Robustheit dieser und anderer Schläuche ist ferner zu berücksichtigen, daß der Raum zwischen Innenschlauch und Außenschlauch nicht vollständig mit Verstärkungswendeln oder einem anderen Element, wie einer Gewebelage, ausgefüllt ist, sondern daß zwischen diesen wenigstens einwendelförmiger-Hohlraum gebildet ist. Dieser trägt wesentlich zu der hohen Flexibilität dieser Schläuche bei, da der Innenschlauch und/oder Außenschlauch im Bereich des Hohlraums Falten bilden kann. Als besonders kritisch hat sich bei derartigen Schlauchstücken die Montage der Anschlußteile an den Schlauchenden, bzw. Anschlußenden erwiesen. Wird eine Anschlußarmatur an das Anschlußende montiert, in dem letzteres zwischen einen Nippel und eine Hülse gequetscht wird, so neigen die Stützwendel dazu, sich durch das relativ weiche Material des Inneoder Außenschlauchs durchzudrücken. Außerdem können derartige Anschlüsse, bei denen das Schlauchende zwischen dem Nippel und der Hülse beziehungsweise einem Schlauchbinder eingequetscht wird, versagen, da die Innenfläche des Innenschlauchs nicht genügend stark gegen den Nippel gepreßt werden kann. Deswegen können im späteren Betrieb des Schlauches Fluide an der Innenwand entlang nach außen gedrückt werden, indem der Innenschlauch im Bereich des Hohlraums abgehoben wird. Das Fluid kann dann weiter in den Hohlraum eindringen und darin zerstörend auf den Schlauch einwirken. Außerdem kann bei einer Ausbildung des Außenschlauchs aus durchsichtigem Material das ästhetische Erscheinungsbild beeinträchtigt werden. Um die letztgenannte unerwünschte Erscheinung zu vermeiden, hat man bereits mit Klebstoffen oder Dichtungsmassen versucht, die offenen Hohlräume abzudichten, was sich jedoch als wenig rationell erwiesen hat. Statt dessen ist es daher auch bekannt geworden (DE-C-26 54 377), bei Ausbildung des Schlauches mit in seiner Wandung verdeckt angeordnetem wendelförmigen Hohlraum das Anschlußteil mit einem in den wendelförmigen Hohlraum eingespritzten wendelförmigen Auslaufende auszubilden, welches einstückig in das axial vorliegende Anschlußprofil als eigentlichem Anschlußteil übergeht. Auch diese Maßnahme setzt aber eine genügende Widerstandsfähigkeit des Außenschlauchs und des Innenschlauchs voraus, damit diese Teile durch den Spritzdruck und die Temperatur des Spritzgußmaterials beim Einspritzen des Auslaufendes nicht nachgeben oder zerstört werden.

Ein weiterer grundsätzlicher Nachteil der eingangs genannten Schläuche, beziehungsweise Schlauchstücke besteht in ihrer Neigung, unmittelbar hinter den Anschlußteilen zu knicken oder unter Faltenbildung besonders stark zu biegen, so daß der Schlauch und insbesondere dessen Außenschlauch durch Materialermüdung zerstört werden kann. Abgesehen davon wird auch der Fluiddurchlaß durch Knicken behindert. - Um dem abzuhelfen, gehört es zum Stand der Technik, über ein Schlauchende einen Schrumpfschlauch aufzuschrumpfen, der geeignet ist, die höheren Beanspruchungen in diesem Bereich aufzunehmen und Kräfte in die weiteren Schlauchbereiche abzuleiten. Das Aufschrumpfen des Schrumpfschlauches verteuert jedoch die Herstellung und ergibt ein ästhetisch nicht sehr befriedigendes Aussehen des Schlauches. - Bekannt ist es auch, um ein unerwünschtes Knicken im Bereich des Anschlußendes zu vermeiden, ein Anschlußteil mit einer Innenhülse aus gummielastischem Kunststoff vorzusehen, die mit dem Innenschlauch verbunden ist und sich über das äußere Anschlußteil hinaus in den Innenschlauch erstreckt. Diese Innenhülse vergrößert den Biegeradius des Schlauches im Anschlußbereich, so daß hier die Knickfestigkeit verbessert wird. Nachteilig ist der höhere Herstellaufwand und ferner die zwangsweise Verringerung des Innendurchmessers des Innenschlauches mit entsprechender Erhöhung des Strömungswiderstandes. Einen wirksamen Schutz gegen mechanische Verletzungen des Außenschlauchs kann die Innenhülse nicht bieten. Der Außenschlauch ist daher nach wie vor außen angreifenden Reibungen und mechanischen Verletzungen ausgesetzt.

Um eine Armatur mit einem Druckschlauch aus Gummi oder gummielastischem Werkstoff der in dem Oberbegriff des Anspruchs 1 angegebenen Gattung fest und dicht zu verbinden, ist es auch bereits bekannt, bei einem vollwandigen Schlauch, in dessen Schlauchwand eine Verstärkungswendel angeordnet ist, in Abständen vorbestimmter Länge Abschnitte oder sogenannte Verbindungsstücke vorzusehen, über welche die Wandstärke gleichbleibend erhöht ist (DE-U-1 998 778). Zwischen diesen Abschnitten, die den für die spätere Montage von Anschlußarmaturen bestimmten Anschlußenden entsprechen, liegen Wandbereiche gleichmäßig geringerer Wandstärke.- Hierdurch werden zwar die Schlauchstücke an ihren Anschlußenden bei der Montage der Anschlußarmaturen nicht beschädigt und lassen sich mit den Armaturen fest und dicht verbinden, jedoch ist kein zusätzlicher Knickschutz im Dauerbetrieb gegeben.

Zu der vorliegenden Erfindung gehört daher die Aufgabe, Schläuche leichter Bauart, die sich insbesondere als Brauseschläuche eignen und die zwischen einem extrudierten Innenschlauch, einem extrudierten Außenschlauch eine Verstärkungswendel aufweisen, ohne erhebliche Verteuerung des Herstellvorgangs so zu verstärken, daß die aus dem Schlauch geschnittenen Schlauchstücke auch im Dauerbetrieb gegen Abknicken und ähnliche Beschädigungen zuverlässig geschützt sind.

Die aus diesem Schlauch hergestellten Stücke sollen darüber hinaus ästhetisch möglichst ansprechend sein.

Diese Aufgabe wird durch die in dem kennzeichnenden Teil des Anspruchs 1 oder 2 angegebene Erfindung gelöst.

Durch den einstückig hergestellten Innenschlauch mit den im einzelnen definierten Abschnitten variierter Wandstärke können Schlauchstücke hergestellt werden, die ohne nennenswerte Veränderung des Aussehens gegenüber herkömmlichen Schlauchstücken wesentlich verbesserte mechanische Eigenschaften aufweisen. Insbesondere wird eine Biegebeanspruchung stetig und ohne Spitzenbeanspruchung des Innenschlauchs an einer Übergangsstelle so ausgeglichen, daß die Schlauchstücke an den Anschlußenden kaum abknicken können, auch nicht, wenn in den Schlauchstücken leichter Bauart ein wendelförmiger Hohlraum zwischen Außenschlauch und Innenschlauch gebildet ist. Es herrscht auch keine Knickgefahr an den Stellen, an denen die variierte Wandstärke in die normale Wandstärke des Innenschlauchs übergeht. Die Abschnitte variierter Wandstärke ergeben also eine weitgehend vollständige Stützfunktion, die den Strömungswiderstand des Schlauchs nicht beeinträchtigt, wenn dieser gemäß Anspruch 2 bevorzugt mit konstantem Innendurchmesser des Innenschlauchs ausgebildet ist. In dem Bereich größter Stärke des Innenschlauchs, in dem die Trennstelle zum Schneiden der Schlauchstücke liegt, sind die Anschlußenden infolge ihrer Verdickung so robust, daß selbst Nippel mit Gewinde als Armaturteile ohne Beschädigung des Innenschlauchs eingesetzt werden können. Außerdem hebt der Innenschlauch im Bereich des dem Verstärkungswendel benachbarten wendelförmigen Hohlraums unter dem im Schlauch auftretenden Fluiddruck nicht ab. Damit wird vermieden, daß Fluid zwischen der Innenfläche des Innenschlauchs und im inneren Teil der Armatur durchgedrückt wird und an der Stirnseite des Schlauchendes in den wendelförmigen Hohlraum gelangt.

Sowohl bei Ausbildung des Schlauchs mit definiert verstärktem Innenschlauch als auch bei analog verstärktem Außenschlauch wird eine zu starke Biegung bzw. eine Knickung im Anschlußbereich vermieden. In dem Teilabschnitt größter Wandstärke ist der Schlauch vergleichsweise wenig flexibel, da hier eine Faltenbildung nach innen oder nach außen durch die große Wandstärke verhindert wird. Da die Wandstärke von dem größten Wert stetig bis auf die normale geringe Wandstärke des Außenschlauchs übergeht, nimmt im entsprechenden Maße die Fähigkeit zur Faltenbildung beim Biegen des Schlauchs zu, bis der zentrale Bereich des Schlauchstückes mit der den Schläuchen mit wendelförmigem Hohlraum eigenen hohen Flexibilität erreicht wird. Besonders sind die aus dem Schlauch mit verstärktem Außenschlauch hergestellten Schlauchstücke insbesondere für den Einsatz mit Handbrause in der wünschenswerten Weise dauerhaft, wenn der Außenschlauch Reibungen und mechanischen Angriffen beim Einschieben der Halterungen ausgesetzt ist. Durch die stetige Abnahme der Wandstärke von dem Teilabschnitt größter Stärke zu der normalen Außenschlauchstärke treten keine Belastungsspitzen auf. Ein ansprechendes Aussehen des Schlauchstücks im Bereich der variierten Wandstärke bleibt wegen dessen ansatzloser Gestaltung erhalten.

Besten Knickschutz weist ein Schlauch auf, bei dem die Verdickung des Außenschlauchs über dem Bereich der Verdickung des Innenschlauchs angeordnet ist. Bei der Herstellung dieses Schlauchs ist vorteilhaft, daß häufig eine geringe Verdickung der Wandstärken von Innenschlauch und Außenschlauch ausreichen. Nach der Abtrennung der Schlauchstücke in vorbestimmter Länge ist bei der Montage der Armaturen, an deren Anschlußenden die sich aus den Verdickungen ergebende Robustheit und Unempfindlichkeit, die den Eigenschaften eines vollwandigen Schlauches nahekommen. Sowohl ein Nippel mit Flansch als Armaturteil als auch die äußere Hülse können hier ohne Verletzungen des Innenschlauchs oder Außenschlauchs herstellungsgünstig montiert werden. Besonders vorteilhaft ist diese Ausführungsform beim Anspritzen eines Anschlußteils, dessen Ansatz in den wendelförmigen Hohlraum hineinreicht, der durch die Stützwendel, den verstärkten Außenschlauch und den verstärkten Innenschlauch in den Anschlußbereichen gebildet wird. Infolge der vorgesehenen Wandstärken des Innenschlauchs und des Außenschlauchs kann der wendelförmige Hohlraum hier mit erhöhtem Spritzdruck und höherer Temperatur beaufschlagt werden, so daß der wendelförmige Spritzgußansatz des Anschlußteils weit in den Schlauch hineinreichen kann. Trotzdem treten bei dem Spritzvorgang an Außenschlauch und Innenschlauch keine Deformationen oder Zerstörungen auf. Ein weiterer Vorteil bietet in diesem Zusammenhang die großflächige Stirnfläche in der Querschnittsebene, in der der Schlauch in die Schlauchstücke aufgeteilt wird. An dieser großen Stirnfläche kann das Material des Spritzlings, welches z.B. einen Flansch bildet, eine zuverlässige stoffmäßige Verbindung mit dem Schlauchmaterial eingehen.

Durch die Ausbildung des Schlauchs gemäß Anspruch 4 werden nach dem Abtrennen der Schlauchstücke Endbereiche gebildet, bei denen die Wandstärke des Innenschlauchs und des Außenschlauchs auf einem Größtwert gleichbleibend ist. Dadurch können Armaturteile mit ebenfalls gleichförmigem Innen- bzw. Außendurchmesser ohne Zerstörung oder Quetschen des Schlauchs montiert werden. Die Teilabschnitte konstanter maximaler Wandstärke gewährleisten dabei eine gute Abdichtwirkung zwischen der Innenfläche des Innenschlauchs und dem an ihm anliegenden Armaturteil, einem Nippel. In besonders vorteilhafter Weise schließt sich an jeden Teilabschnitt konstanter maximaler Wandstärke zu der Schlauchstückmitte hin ein Teilabschnitt abnehmender Wandstärke des Innen- und Außenschlauchs an. Der Übergang zwischen diesen Teilabschnitten erfolgt dabei allmählich und stetig ohne sprunghafte Veränderung der Wandstärke. Dies kommt den Festigkeitseigenschaften der Schlauchstückenden zugute. Durch die Teilabschnitte zu den Schlauchstückmitten hin abnehmender Wandstärke werden Biegebeanspruchungen der Schlauchstücke bei deren Gebrauch insbesondere als Brauseschlauch so gleichmäßig aufgenommen, daß es nicht zu unzulässigen Belastungen nach der Anschlußarmatur kommen kann. Insbesondere wird ein Einknicken des Schlauchs an dieser Stelle vermieden.

In den Teilabschnitten zu- bzw. abnehmender Wandstärke des Innen- und Außenschlauchs kann der verstärkte Wandbereich des Außenschlauchs über denjenigen des Innenschlauchs hinwegreichen. Damit wird, abgesehen von der Ableitung der Biegebeanspruchungen ein besonders sorgfältiger Schutz gegen äußere mechanische Beschädigungen erreicht. - Andererseits ist es auch möglich, die Verstärkungen der Wand des Innenschlauchs über diejenigen des Außenschlauchs zur Schlauchstückmitte hin hinausreichen zu lassen. In diesem Fall wird ein besonders wirksamer Knickschutz erzielt. In einer vorteilhaften Variante des Schlauchs verläuft die Zu- und Abnahme der Wandstärke gemäß Anspruch 5 im Längsschnitt des Schlauchs gesehen linear Diese gleichmäßige Zunahme und Abnahme der Wandstärke ist fertigungstechnisch besonders leicht realisierbar.

Statt dessen kann aber auch die Variation der Wandstärke gemäß Anspruch 6 mit flach tangential einlaufenden Übergängen zwischen der normalen Schlauchstärke und der erhöhten Schlauchstärke erfolgen. Diese Ausführungsform ist hinsichtlich der Belastbarkeit und Dauerfestigkeit des Schlauches, bzw. aus ihm angefertigter Schlauchstücke vorzuziehen.

Wenn nur der Außenschlauch oder der Innenschlauch Verstärkungen durch die Abschnitte variierter Wandstärke aufweist, beträgt die größte Wandstärke des Innen- oder Außenschlauchs nach Anspruch 7 vorteilhaft das Doppelte oder Dreifache der kleinsten Wandstärke. Damit werden auch ungünstige Biegebeanspruchungen sicher ausgeglichen, die bei dem Gebrauch von derart hergestellten Schlauchstücken entstehen können.

Wenn dagegen der Schlauch sowohl einen verstärkten Innenschlauch als auch verstärkten Außenschlauch aufweist, genügt eine geringere Verstärkung der Wände jeweils um das 0,5-fache bis zu dem Doppelten der kleinsten Wandstärke.

Die vorteilhaften Merkmale von Schlauchstücken, die durch Ablängen von dem erfindungsgemäßen Schlauch und ggfs. anschließender Montage der Anschlußarmatur erzielt werden, sind zum Teil in den Ansprüchen enthalten:

Anspruch 12 gibt die auf die Länge der Anschlußarmatur bezogene Länge des Teilabschnitts konstanter maximaler Wandstärke an. Bei dieser Dimensionierung kommt der verstärkte Endabschnitt des Schlauchstücks über die gesamte Länge der Anschlußarmatur zum Tragen.

Insbesondere in Verbindung mit den voranstehend definierten Teilabschnitten konstanter maximaler Wandstärke an. Bei dieser Dimensionierung kommt der verstärkte Endabschnitt des Schlauchstücks über die gesamte Länge der Anschlußarmatur zum Tragen.

Insbesondere in Verbindung mit den voranstehend definierten Teilabschnitten konstanter maximaler Wandstärke sind die sich hieran anschließenden Teilabschnitte zu- bzw. abnehmender Wandstärke vorteilhaft zwischen 3 und 10 cm lang dimensioniert, um einen Ausgleich von Biegebeanspruchungen herbeizuführen und ein Einknicken in der Nähe der Anschlußarmaturen sicher zu vermeiden.

Die Ansprüche 14 - 16 sind auf Verfahren zur Herstellung eines Schlauchs mit den angegebenen Merkmalen und vorteilhaften Eigenschaften gerichtet. Die zur Herstellung nach den Ansprüchen 14 - 16 zu treffenden Maßnahmen bedingen nur eine unwesentliche Erhöhung des Herstellaufwands. Insbesondere können die üblichen maschinellen Einrichtungen zur Herstellung weitgehend beibehalten werde, insbesondere die Extruder und die Wickelmaschinen. Zusatzeinrichtungen sind lediglich Steuerungsgeräte, um die Extrusionsgeschwindigkeit bei gleichbleibender Abzugsgeschwindigkeit des extrudierten Schlauchs zu veriieren oder aber bei konstanter Extrusionsgeschwindigkeit die Abzugs- und Wickelgeschwindigkeit zu verändern.

Im einzelnen wird gemäß Anspruch 14 vorgesehen, daß die Abzugsgeschwindigkeit konstant gehalten wird und die Extrusionsgeschwindigkeit des in seiner Wandstärke zu verändernden Innenschlauchs oder Außenschlauchs bzw. besonders vorteilhaft beider Schläuche in vorgegebenen Zeitabschnitten allmählich zu erhöhen. - Im Falle eines gewünschten Teilabschnitts konstanter maximaler Wandstärke während einer entsprechenden Zeit gleichzuhalten und anschließend auf die normale Wandstärke zu reduzieren. Die Steuerung kann dabei besonders genau wegabhängig als Funktion der extrudierten Länge bzw. der aufgewickelten Länge des Schlauches gesteuert werden oder aber nach einem fest vorgegebenen Zeitprogramm. - Ohne weiter kann auch bei diesem Verfahren zur Veränderung der Wandstärke mit einem Produktionsdorn gearbeitet werden. Wird der Innenschlauch über einem Produktionsdorn extrudiert, so bleibt in besonders vorteilhafter Weise der Innendurchmesser des Innenschlauchs konstant. Anschließend an die Herstellung des Innenschlauchs kann dieser auf seiner äußeren Oberfläche mit in Längsrichtung verlaufenden Fäden oder Bändern versehen werden, auf die wiederum ein oder zwei Stützwendel gewickelt werden können. Über diese Struktur wird der Außenschlauch extrudiert. Schließlich wird der dieserart kontinuierlich gefertigte Schlauch aufgewickelt. Dieser Schlauch wird in späteren Fertigungsschritten in die Schlauchstücke gewünschter Länge geschnitten, so daß jeweils die axialen Mitten der verstärkten Abschnitte aufgeteilt werden. Letztlich kann auf diese verstärkten Anschlußenden der Schlauchstücke die Armatur montiert werden, um beispielsweise einen Brauseschlauch fertigzustellen. Bei Erhöhung der Extrusionsgeschwindigkeit an den zu verstärkenden Innenschlauch- und Außenschlauchstellen muß dafür gesorgt werden, daß die Variation der Extrusionsgeschwindigkeit des Außenschlauchs so abgestimmt ist, daß die Mitten der verstärkten Abschnitte in gleichen Querschnittsebenen liegen.

Dies ist beispielsweise dann ohne Erhöhung des Aufwands möglich, wenn der Abstand der Extrusionsstellen gleich dem Abstand der Abschnitte variierter Wandstärke, bzw. eines vielfachen hiervon ist.

Eine andere Möglichkeit, die je nach maschineller Ausrüstung der Fertigungsstrecke günstiger ist, besteht nach Anspruch 15 in einer Veränderung der Abzugsgeschwindigkeit des Schlauchs von der Extrusionsstelle bei gleichbleibender Extrusionsgeschwindigkeit. Auch hier können die Abschnitte zu variierender Wandstärke wegabhängig oder zeitabhängig gesteuert werden.

Die Extrusionsgeschwindigkeit wird durch die Extruderdrehzahl gesteuert. An den zu verstärkenden Abschnitten des Innenschlauchs oder Außenschlauchs wird demgemäß die Extruderdrehzahl nach einem vorgegebenen Programm von einem vorgegebenen Minimalwert, welcher der normalen Innenschlauch- oder Außenschlauchstärke entspricht, bis zu dem Maximalwert allmählich erhöht, der die größte erwünschte Wandstärke ergibt. Anschließend wird die Extruderdrehzahl auf diesem hohen Wert während einer Zeit konstant gehalten, die dem Teilabschnitt konstanter maximaler Wandstärke entspricht, um schließlich auf das normale Maß reduziert zu werden. Dieser Vorgang wiederholt sich in regelmäßigen Zeitabschnitten oder Zeitabständen, um gleichweit auseinanderliegende Abschnitte variierter Wandstärke zu erzielen.

Die Erfindung wird im folgenden anhand einer Zeichnung mit 5 Figuren erläutert. Es zeigen:

Fig. 1 zwei aus einem Schlauch gebildete Anschlußenden von Schlauchstücken in einer ersten Ausführungsform im Längsschnitt,

Fig. 2 zwei Anschlußenden von Schlauchstücken, die aus einem Schlauch einer zweiten Ausführungsform gebildet sind, ebenfalls im Längsschnitt,

Fig. 3 zwei Anschlußenden von Schlauchstücken mit daran angebrachten Anschlußteilen, wobei die Schlauchstücke aus einem Schlauch in einer dritten Ausführungsform gebildet sind und

Fig. 4 eine Fertigungseinrichtung zur Herstellung eines Schlauchs gemäß Fig. 3.

Fig. 5 ein von dem Schlauch abgetrenntes Schlauchstück (nicht maßstäblich).

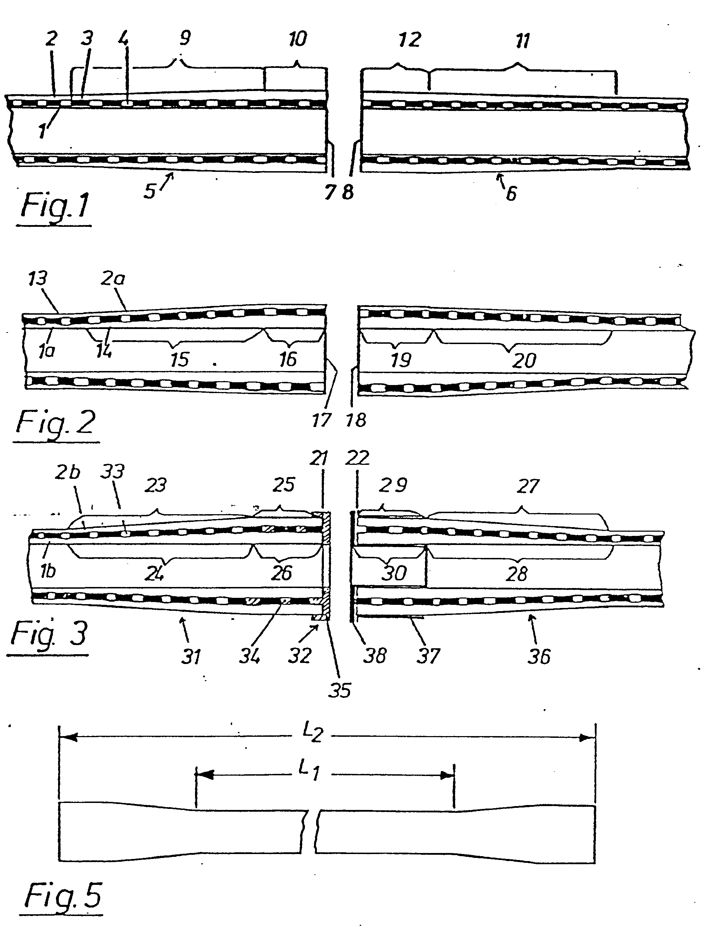

Der Schlauch in Fig. 1 besteht ebenso wie die Schläuche in Figuren 2 und 3 aus einem Innenschlauch 1, einem Außenschlauch 2, die beide aus thermoplastischen oder elastomeren Material extrudiert sind. Zwischen dem Innen- und dem Außenschlauch ist ein Verstärkungswendel 3 aus härterem Kunststoff angeordnet, so daß der Außenschlauch, der Innenschlauch und der Verstärkungswendel einen wendelförmigen Hohlraum 4 begrenzen.

Die aus diesen Elementen bestehenden Schlauchstücke 5 und 6 sind durch Auftrennen eines Schlauches an der Schnittstelle 7/8 gebildet.

Während der Innenschlauch 1 über die gesamte Länge der Schlauchstücke über die Schnittstelle 7/8 hinaus eine konstante Wandstärke aufweist, nimmt die Außenschlauchwandstärke des linken Schlauchstücks in dem Überleitungsbereich 9 von links nach rechts kontinuierlich zu, bis die maximale Wandstärke in dem Befestigungsbereich 10 einer Hülse erreicht wird. Der Übergangsbereich und der Befestigungsbereich werden auch als Abschnitte variierter Wandstärke bezeichnet. Der Übergangsbereich 9 stellt zugleich einen Teilabschnitt zunehmender Wandstärke des Außenmantels dar, während der Befestigungsbereich 10 einen Teilabschnitt konstanter maximaler Wandstärke bildet.

Das in der Zeichnung rechte Wandstück entspricht dem linken Schlauchstück, so daß die Wandstärke des Außenschlauchs 2 des rechten Schlauchstücks 6 von der Schnittstelle 7/8 in einem Überleitungsbereich 11 stetig abnimmt. Auch hier schließt sich der Überleitungsbereich 11 an einen Bereich 12 zur Befestigung einer Hülse an, der auch als Teilabschnitt konstanter maximaler Wandstärke bezeichnet wird.

In der Zeichnung ist im einzelnen dargestellt, wie in dem Überleitungsbereich die Wandstärke des Außenschlauchs ohne sprunghafte Veränderungen entlang der Längsrichtung des Schlauchs zu- bzw. abnimmt.

Für einen Brauseschlauch mit einem typischen lichten Innendurchmesser von 8 - 12 mm beträgt die Länge des Überleitungsbereichs vorzugsweise zwischen 3 und 10 cm.

Die Ausführungsform nach Fig. 2 entspricht derjenigen nach Fig. 1 mit der Abwandlung, daß hier der Außenschlauch 13 eine konstante Wandstärke aufweist, während die Wandstärke eines Innenschlauchs 14 in einem Überleitungsbereich 15 stetig zunimmt, bis ein Bereich, bzw. Teilabschnitt 16 konstanter maximaler Wandstärke erreicht wird, der zur Befestigung eines Nippels vorgesehen ist.

Das rechte Schlauchstück in Fig. 2, das wiederum durch Schnitt des Schlauches an der Schnittstelle 17/18 gebildet ist, hat wiederum einen ähnlichen Aufbau wie das linke Schlauchstück, und zwar mit einem Bereich konstanter maximaler Wandstärke 19 des Innenschlauchs und einem nach rechts anschließenden Überleitungsbereich 20 abnehmender Wandstärke.

Die Bereiche maximaler Wandstärke 10, 12, 16, 19 in Figuren 2 und 3 weisen etwa das Doppelte bis zum Dreifachen der normalen Wandstärke auf, die links der Überleitungsbereiche 9, 15 oder rechts der Überleitungsbereiche 11, 20 gemessen werden kann.

Bei der besonders bevorzugten Ausführungsform nach Fig. 3, bei der symmetrisch zu der Schnittstelle 21, 22 sowohl der Außenschlauch als auch der Innenschlauch verstärkt ist, kann hingegen die Verstärkung der Wände geringer gewählt werden, als in den Ausführungsformen nach den Figuren 1 und 2. In Fig. 3 beträgt die Verstärkung zusätzlich das 0,5-fache der normalen Wandstärke bis zur doppelten Wandstärke außerhalb der Abschnitte variierter Stärke.

In der Ausführungsform nach Fig. 3 sind die Längen der Überleitungsbereiche und Befestigungsbereich des Innenschlauchs und des Außenschlauchs etwa gleich. Im einzelnen liegt ein Überleitungsbereich 23 des Außenschlauchs über einem entsprechenden Überleitungsbereich 24 des Innenschlauchs, der zusammen mit dem Außenschlauch und dem Verstärkungswendel das linke Schlauchstück bildet. Ebenso nehmen die Befestigungsbereiche, das heißt, die Teilabschnitte maximaler Wandstärke 25 bzw. 26 des Außenschlauchs und des Innenschlauchs gleiche Längen ein. Die analogen Überleitungsbereiche des Außenschlauchs und des Innenschlauchs des rechten Schlauchstücks sind mit 27/28 bezeichnet, während die Bereiche maximaler Wandstärke des Außenschlauchs und des Innenschlauchs die Bezugszeichen 29/30 tragen.

Fig. 3 zeigt weiter, wie an dem linken Schlauchstück 31 ein Spritzgußteil als Anschlußteil 32 angespritzt sein kann. Das Spritzgußteil weist einen weit in einen wendelförmigen Hohlraum 33 hineinreichenden Ansatz 34 auf, der für eine sichere Befestigung des Anschlußflansches 35 sorgt und gleichzeitig dafür, daß kein Fluid sich in den wendelförmigen Hohlraum hineindrücken kann.

Das rechte Schlauchstück 36 ist hingegen mit einem Anschlußteil, bestehend aus einer äußeren Hülse 37 und einem inneren Nippel mit stirnseitigem Flansch 38 ausgerüstet. Die Hülse wird von außen auf den Außenschlauch, und zwar auf dessen Abschnitt maximaler Wandstärke 29 aufgebracht. Dann kann der Nippel in dem Innenschlauch ohne dessen Beschädigung in dem Bereich maximaler Wandstärke 30 aufgeweitet werden, bis er innen an dem Schlauch genügend fest anliegt.

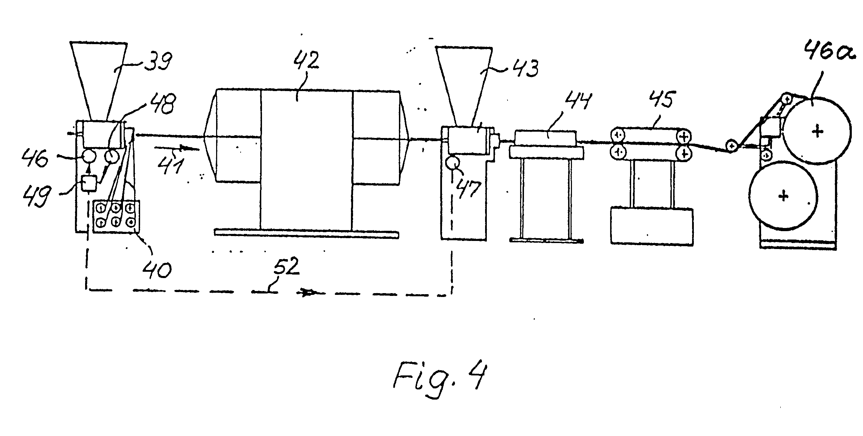

Ein Verfahren zur Herstellung eines Schlauches, aus dem die Schlauchstücke gemäß Fig. 3 geschnitten werden können, wird im folgenden anhand der Figur 4 erläutert, in der eine Produktionsanlage dargestellt ist:

Ein erster Extruder 39 mit Querspritzkopf und einem nicht dargestellten Produktionsdorn extrudiert den Innenschlauch in noch im einzelnen anzugebender Stärke. Eine Abspuleinrichtung 40 versieht den Innenschlauch in Längsrichtung mit axialen Verstärkungsfäden, die allerdings in Fig. 3 nicht dargestellt sind. Hieran schließt sich in Abzugsrichtung 41 ein Zentralwickler 42 an, der Verstärkungswendel auf den mit Verstärkungsfäden versehenen Innenschlauch aufbringt. Es folgt ein zweiter Extruder 43 mit Querspritzkopf zum Extrudieren des Außenschlauches auf den mit Verstärkungsfäden und Verstärkungswendel versehenen Innenschlauch. Weiter folgen in Abzugsrichtung eine Kühleinrichtung 44, eine Abzugseinheit 45 und ein Fertigschlauchwickler 46a an dessen Stelle auch eine Ablängvorrichtung und eine Vorrichtung zur Entfernung des Dorns stehen kann. Es besteht die Besonderheit darin, daß Antriebsmotoren 46/47, die in den Extrudern 39, 43, zum Antrieb von Schnecken dienen, welche die Extrusionsgeschwindigkeit bestimmen, in Abhängigkeit von der Zeit oder von der Länge des extrudierten Schlauches in einer vorgegebenen Weise gesteuert werden. Zur längenabhängigen Steuerung ist im Extruder 1 ein Weggeber vorgesehen, der die jeweils extrudierte Innenschlauchlänge mißt. Der Weggeber liefert das Eingangssignal für ein Steuergerät 49, welches nach einer vorgegebenen eingestellten Kennlinie, die die Drehzahl der Motoren 46 und 47 beinflussenden Ausgangssignale über die Leitungen 50 und 51 abgibt. Durch die Leitung 52 ist der Motor 47 mit dem Motor 46 synchronisiert, so daß bei einem vorgegebenen Abstand der Extruder 39 und 43 gleich einem Vielfachen des Abstands der Verdickungen an dem Schlauch, bzw. des Abstands der späteren Schnittstellen, wie 21/22 in Fig. 3 die Überleitungsbereiche 23 und 24 bzw. 27 und 28 sowie die Bereiche maximaler Wandstärken 25 und 26 bzw. 29 und 30 übereinanderliegend extrudiert werden.

Durch die Steuerung in Fig. 4 wird die Drehzahl des Extruders bei gleichbleibender Abzugsgeschwindigkeit durch die Abzugseinheit 45 allmählich erhöht, wenn der Überleitungsbereich 24 erreicht wird, bis zum Bereich maximaler Wandstärke 26. Sobald dieser Bereich 26 extrudiert wird, bleibt die Extruderdrehzahl erhalten, bis der Bereich 30 extrudiert ist, um dann wieder kontinuierlich in dem Überleitungsbereich 28. abzunehmen bis zur normalen Schlauchstärke des Innenschlauchs. Analog dazu wird durch den Extruder 43 Drehzahl-gesteuert der Außenschlauch auf dem mit dem Verstärkungswendel versehenen Innenschlauch extrudiert. Zeitgleich mit der Herstellung des Innenschlauchs bestehend aus den Abschnitten 24, 26, 30 und 28 wird hingegen ein Außenschlauch hergestellt, der um ein ganzes Vielfaches der Abstände der variierten Wandstärken in Abzugsrichtung versetzt ist, entsprechend dem räumlichen Abstand der Extruder 39 und 43.

Der im regelmäßigen Abstand mit Verstärkungen versehene Schlauch wird mittels der Abzugseinheit 45 und dem Fertigschlauchwickler aufgewickelt und später durch Trennen an den Schnittstellen 21, 22 aufgetrennt, um Schlauchstücke mit verstärkten Anschlußenden zu erzeugen, an denen die Anschlußteile unproblematisch beschädigungsfrei angebracht werden können.

In Fig. 5 ist - in einem anderen Maßstab als die Schlauchenden in den Figuren 1-3 - ein Schlauchstück vorbestimmter Länge $L_2$ ohne Anschlußarmaturen dargestellt. Das Schlauchstück ist durch Abtrennen von einem Schlauch entstanden, der verstärkte Abschnitte entsprechend Fig. 3 aufweist. In dem Abschnitt $L_1$ ist das Schlauchstück in Fig. 5 unverstärkt; die verstärkten Abschnitte liegen also in den Bereichen $L_2$ minus $L_1$ beidseitig zu der Schlauchstückmitte.

**Patentansprüche**

1. Schlauch zur Herstellung von Anschlußenden aufweisenden Schlauchstücken vorbestimmter Länge mit einer Schlauchwand aus thermoplastischen oder elastomerem Werkstoff, in der eine Verstärkungswendel angeordnet ist und der Abschnitte variierter Wandstärke aufweist, deren Abstände gleich der vorbestimmten Länge sind, wobei Bereiche geringerer Wandstärke zwischen den für die Montage von Anschlußarmaturen bestimmten Anschlußenden liegen,

dadurch gekennzeichnet,

daß bei einem Aufbau des Schlauchs aus einem einstückig extrudierten Außenschlauch, einem einstückig extrudierten Innenschlauch und der zwischen diesen angeordneten Verstärkungswendel insbesondere zur Herstellung von Brauseschläuchen der Innenschlauch (14) und/oder Außenschlauch (1) derart gestaltete Abschnitte (15, 16, 19, 20 bzw. 9-12) aufweist, daß längs eines Abschnitts die Wandstärke ausgehend von kleinster Stärke gleich der Wandstärke zwischen den Abschnitten zunächst stetig bis zu größter Stärke zunimmt (Teilabschnitt 15 bzw. 9) und anschließend wieder auf kleinste Stärke stetig abnimmt (Teilabschnitt 20 in Fig. 2 bzw. 11 in Fig. 1).

2. Schlauch zur Herstellung von Anschlußenden aufweisenden Schlauchstücken vorbestimmter Länge mit einer Schlauchwand aus thermoplastischem oder elastomerem Werkstoff, in der parallel zum Umfang mindestens eine Gewebelage angeordnet ist und der Abschnitte variierter Wandstärke aufweist, deren axiale Abstände gleich der vorbestimmten Länge sind, wobei Bereiche geringerer Wandstärke zwischen den für die Montage von Anschlußarmaturen bestimmten Anschlußenden liegen,

dadurch gekennzeichnet,

daß bei einem Aufbau des Schlauchs aus einem Außenschlauch, einem Innenschlauch und zwischen diesen angeordneten Gewebelage, der Innenschlauch und/oder Außenschlauch derart gestaltete Abschnitte aufweist, daß längs eines Abschnitts die Wandstärke ausgehend von kleinster Stärke gleich der Wandstärke zwischen den Abschnitten zunächst stetig bis zu größter Stärke zunimmt und anschließend wieder auf kleinste Stärke stetig abnimmt.

3. Schlauch nach Anspruch 1 oder 2, gekennzeichnet durch einen konstanten Innendurchmesser des Innenschlauchs (14 in Fig. 2).

4. Schlauch gemäß Anspruch 1 oder 2, dadurch gekennzeichnet, daß bei Kombination der Abschnitte variierter Wandstärke des Innenschlauchs (z.B. Abschnitt 24, 26, 28, 30) und des Außenschlauchs (z.B. Abschnitt 23, 25, 27, 29) deren Mitten jeweils in gleichen Querschnittsebenen (Schnittstelle 21/22) des Schlauchs liegen (Fig. 3).

5. Schlauch nach einem der Ansprüche 1 - 4, dadurch gekennzeichnet, daß zwischen den Abschnitten zu- und abnehmender Wandstärke (z.B. 15 und 20 in Fig. 2, 9 und 11 in Fig. 1) des Innen- und/oder Außenschlauchs ein Teilabschnitt (z.B. 16, 19 in Fig. 2; 19, 12 in Fig. 1) konstanter maximaler Wandstärke liegt.

6. Schlauch gemäß den Ansprüchen 1 -5, dadurch gekennzeichnet

daß die Variation der Wandstärke (z.B. in Teilabschnitten 9 in Fig. 1, 15 in Fig. 2, 23, 24 in Fig. 3) im Längsschnitt des Schlauchs gesehen linear verläuft.

7. Schlauch gemäß den Ansprüchen 1 - 5, dadurch gekennzeichnet, daß die Variation der Wandstärke an den Abschnitten im Längsschnitt des Schlauchs gesehen mit wechselnder Krümmung annähernd S-förmig dergestalt verläuft, daß die Abschnitte tangential in die zwischen ihnen liegenden Bereiche des Schlauches übergehen und in die ggfs. vorhandenen Teilabschnitte konstanter maximaler Wandstärke ebenfalls tangential übergehen.

8. Schlauch nach einem der Ansprüche 1 - 4, dadurch gekennzeichnet, daß die größte Wandstärke des Innen- oder Außenschlauchs (1a oder 1) das Doppelte bis Dreifache der kleinsten Wandstärke beträgt (Fig. 1, 2).

9. Schlauch nach Anspruch 4, dadurch gekennzeichnet, daß die größte Wandstärke des Innenschlauchs und des Außenschlauchs (1b, 2b) jeweils das 1,5 bis 2-fache der kleinsten Wandstärke beträgt. (Fig. 3).

10. Schlauch nach Anspruch 4, dadurch gekennzeichnet, daß die Abschnitte variierter Wandstärke des Außenschlauchs länger sind als die Abschnitte variierter Wandstärke des Innenschlauchs.

11. Schlauch nach Anspruch 4, dadurch gekennzeichnet, daß die Abschnitte variierter Wandstärke des Innenschlauchs länger sind als die Abschnitte variierter Wandstärke des Außenschlauchs.

12. Aus einem Schlauch gemäß den Ansprüchen 1-5 hergestelltes Schlauchstück, das an zwei benachbarten Abschnitten variierter Wandstärke in der Mitte deren Teilabschnitte konstanter maximaler Wandstärke getrennt ist, mit einer Anschlußarmatur an einem Anschlußende insbesondere eines Brauseschlauchs, dadurch gekennzeichnet, daß der abgetrennte Teilabschnitt (z.B. 26 oder 30) konstanter maximaler Wandstärke des Außenschlauchs (2b) länger als die Anschlußarmatur (32 bzw. 37, 38) ist.

13. Schlauchstück, insbesondere Brauseschlauch, nach Anspruch 12, dadurch gekennzeichnet, daß die Teilabschnitte (z.B. 9, 15, 24 bzw. 11, 20, 27, 28) zu- bzw. abnehmender Wandstärke zwischen 3 und 10 cm lang sind.

14. Verfahren zur Herstellung eines Schlauchs nach den Ansprüchen 1-11, durch aufeinanderfolgendes Extrudieren des Innenschlauchs, Abziehen des extrudierten Innenschlauchs von einem Extruder durch eine Produktionsstraße, Bewickeln des extrudierten Innenschlauchs mit mindestens einem Verstärkungswendel oder Ausrüsten des extrudierten Innenschlauchs mit mindestens einem Abstandselement, Extrudieren des Außenschlauchs auf den bewickelten oder ausgerüsteten Innenschlauch, Abziehen und Aufwickeln des bewickelten und mit dem Anschlußschlauch ummantelten Schlauchs, dadurch gekennzeichnet, daß bei gleichbleibender Abzugsgeschwindigkeit die Extrusionsgeschwindigkeit des Innenschlauchs und/oder Außenschlauchs in vorgegebenen Zeitabschnitten nacheinander kontinuierlich erhöht, ggfs. auf dem relativ hohen Wert konstant gehalten und schließlich auf den Ausgangswert allmählich reduziert wird.

15. Verfahren zur Herstellung eines Schlauchs nach den Ansprüchen 1-11, durch aufeinanderfolgendes Extrudieren des Innenschlauchs, Abziehen des extrudierten Innenschlauchs von einem Extruder durch eine Produktionsstraße, Bewickeln des extrudierten Innenschlauchs mit mindestens einem Verstärkungswendel oder Ausrüsten des extrudierten Innenschlauchs mit mindestens einem Abstandselement, Extrudieren des Außenschlauchs auf den bewickelten oder ausgerüsteten Innenschlauch, Abziehen und Aufwickeln des bewickelten und mit dem Anschlußschlauch ummantelten Schlauchs, dadurch gekennzeichnet, daß bei gleichbleibenden Extrusionsgeschwindigkeiten des Innenschlauchs und des Außenschlauchs die Abzugsgeschwindigkeit des Innen- und Außenschlauchs sowie die Wickelgeschwindigkeit sequentiell kontinuierlich verringert, ggfs. auf dem relativ niedrigen Wert konstant gehalten werden und schließlich auf den Ausgangswert heraufgesetzt werden.

16. Verfahren nach einem der Ansprüche 13 oder 14, dadurch gekennzeichnet, daß der Innenschlauch über einem Produktionsdorn extrudiert wird.

**Claims**

1. Hose for manufacturing hose pieces of predetermined length with coupling ends, having a hose wall made of thermoplastic or elastomeric material in which a reinforcing helix is arranged and which comprises sectors of varied wall thickness, the spacings of which are equal to the predetermined length, regions of relatively small wall thickness being situated between the coupling ends intended for the mounting of coupling fittings, characterised in that, with the hose comprising an outer hose extruded in one piece, an inner hose extruded in one piece, and the reinforcing helix arranged between these, especially for manufacture of shower or spray hoses, the inner hose (14) and/or outer hose (1) have/has sectors (15, 16, 19, 20 and, respectively, 9-12) so fashioned that along a sector the wall thickness starts from the smallest thickness equal to the wall thickness between the sectors and at first increases continuously to its greatest thickness (part-sector 15 or 9 respectively) and then decreases again continuously to the smallest thickness (part-sector 20 in Fig. 2 or 11 in Fig. 1).

2. Hose for manufacturing hose pieces of predetermined length with coupling ends, having a hose wall made of thermoplastic or elastomeric material in which at least one fabric layer is arranged parallel to the periphery and which comprises sectors of varied wall thickness whose axial spacings are equal to the predetermined length, regions of relatively small wall thickness being situated between the coupling ends intended for the mounting of coupling fittings, characterised in that, with the hose comprising an outer hose, an inner hose, and a fabric layer arranged between these, the inner hose and/or the outer hose have/has sectors which are so fashioned that along a sector the wall thickness starts from the smallest thickness equal to the wall thickness between the sectors and first increases continuously to the greatest thickness and then decreases again to the smallest thickness continuously.

3. Hose according to claim 1 or 2, characterised by a constant inner diameter of the inner hose (14 in Fig. 2).

4. Hose according to claim 1 or 2, characterised in that when there is a combination of sectors of varied wall thickness of the inner hose(e.g. sectors 24, 26, 28, 30) and of the outer hose (e.g. sectors 23, 25, 27, 29), the centres thereof are in each case situated in like crosssectional planes (section zone 21/22) of the hose (Fig. 3).

5. Hose according to one of claims 1-4, characterised in that between the sectors of increasing and decreasing wall thickness (e.g. 15 and 20 in Fig. 2, 9 and 11 in Fig. 1) of the inner and/or outer hoses, a part-sector (e.g. 16, 19 in Fig. 2; 19, 12 in Fig. 1) of constant maximum wall thickness is situated.

6. Hose according to claims 1-5, characterised in that the variation in wall thickness (e.g. in part-sectors 9 in Fig. 1, 15 in Fig. 2, 23, 24 in Fig. 3) extends linearly as seen in longitudinal sectional view of the hose.

7. Hose according to claims 1-5, characterised in that as viewed in longitudinal section of the hose the variation of the wall thickness at the sectors follows an approximately S-shaped course with varying curvature in such a manner that the sectors merge tangentially into the hose regions situated between them and likewise merge tangentially into part-sectors of constant maximum wall thickness which may be present.

8. Hose according to one of claims 1 - 4, characterised in that the greatest wall thickness of the inner or outer hose (1a or 1) amounts to twice to three times the smallest wall thickness (Figs. 1, 2).

9. Hose according to claim 4, characterised in that the greatest wall thickness of the inner hose and of the outer hose (1b, 2b) amounts in each case to 1.5 to 2 times the smallest wall thickness (Fig. 3).

10. Hose according to claim 4, characterised in that the sectors with varied wall thickness of the outer hose are longer than the sectors with varied wall thickness of the inner hose.

11. Hose according to claim 4, characterised in that the sectors with varied wall thickness of the inner hose are longer than the sectors with varied wall thickness of the outer hose.

12. Hose piece which is manufactured from a hose according to claims 1 - 5 and which at two neighbouring sectors of varied wall thickness is divided in the middle of their part-sectors of constant maximum wall thickness, with a coupling fitting on one coupling end, especielly of a shower or spray hose, characterised in that the divided part-sector (e.g. 26 or 30) of constant maximum wall thickness of the outer hose (2b) is longer than the coupling fitting (32, or 37, 38 respectively).

13. Hose piece, especially spray hose, according to claim 12, characterised in that the part-sectors (e.g. 9, 15 24, and 11, 20, 27, 28) of increasing and decreasing wall thickness respectively are between 3 and 10 cm long.

14. Method of manufacturing a hose according to claims 1 - 11, by effecting in succession the extrusion of the inner hose, the drawing-off of the extruded inner hose from an extruder through a production line, the winding of at least one reinforcing helix about the extruded inner hose or equipping the extruded inner hose with at least one spacer element, the extrusion of the outer hose on to the inner hose thus wound or equipped, the drawing-off and winding-up of the wound hose covered with the outer hose, characterised in that, with the drawing-off speed constant, the extrusion speed of the inner hose and/or outer hose is at predetermined times successively continuously increased, kept constant at the relatively high value if appropriate, and finally gradually reduced to the initial value.

15. Method of manufacturing a hose according to claims 1 - 11, by effecting in succession the extrusion of the inner hose, the drawing-off of the extruded inner hose from an extruder through a production line, the winding of at least one reinforcing helix about the extruded inner hose or equipping the extruded inner hose with at least one spacer element, the extrusion of the outer hose on to the inner hose thus wound or equipped, the drawing-off and winding-up of the wound hose covered with the outer hose, characterised in that, with the extrusion speeds of the inner hose and outer hose constant, the drawing-off speed of the inner and outer hose and also the wrap-winding speed are, in succession, continuously reduced, kept constant at the relatively low value if appropriate, and finally raised to the initial value.

16. Method according to one of claims 13 or 14, characterised in that the inner hose is extruded over a production mandrel.

## Revendications

1. Tuyau souple pour la fabrication de pièces de tuyaux souples de longueur prédéterminée présentant des bouts de raccordement, dont la paroi est en matière thermoplastique ou en élastomère, dans laquelle est disposé au moins un renfort hélicoïdal, et qui comprend des tronçons d'épaisseur de paroi variable dont les distances sont égales à la longueur prédéterminée, des parties de plus faible épaisseur de paroi se trouvant entre les bouts de raccordement prévus pour le montage d'éléments de robinetterie, caractérisé en ce qu'un tuyau intérieur (14) et/ou un tuyau extérieur (1) formant la structure d'un tuyau constitué par un tuyau extérieur extrudé d'un seul tenant, d'un tuyau intérieur extrudé d'un seul tenant et du renfort hélicoïdal disposé entre ces derniers, notamment pour la fabrication des tuyaux de douche, comportent des tronçons (15, 16, 19, 20 ou 9 à 12) conformés de telle sorte que l'épaisseur de la paroi croît d'abord de manière constante le long d'un tronçon à partir de la plus petite épaisseur qui est égale à l'épaisseur de la paroi entre les tronçons, jusqu'à atteindre la plus forte épaisseur (tronçon partiel 15 ou 9), puis décroît de nouveau de manière constante jusqu'à atteindre la plus petite épaisseur (tronçon partiel 20 sur la figure 2 ou 11 sur la figure 1).

2. Tuyau souple pour la fabrication de pièces de tuyaux souples de longueur prédéterminée présentant des bouts de raccordement, dont la paroi est en matière thermoplastique ou en élastomère, dans laquelle se trouve au moins une couche de tissu parallèle à la périphérie, et qui comprend des tronçons d'épaisseur de paroi variable, dont les distances axiales sont égales à la longueur prédéterminée, des parties de plus faible épaisseur de paroi se trouvant entre les bouts de raccordement prévus pour le montage de la robinetterie, caractérisé en ce que le tuyau intérieur et/ou le tuyau extérieur formant la structure du tuyau constitué par un tuyau extérieur, un tuyau intérieur et une couche de tissu disposée entre ces derniers comportent des tronçons conformés de telle sorte que à partir de la plus petite épaisseur qui est égale à l'épaisseur de la paroi entre les tronçons, l'épaisseur de la paroi croît d'abord de manière constante le long d'un tronçon jusqu'à atteindre la plus forte épaisseur, puis décroît de nouveau de manière constante jusqu'à la plus petite épaisseur.

3. Tuyau selon l'une des revendications 1 ou 2, caractérisé en ce que le tuyau intérieur (14 sur la figure 2) a un diamètre intérieur constant.

4. Tuyau selon l'une des revendications 1 ou 2, caractérisé en ce que lorsque le tuyau intérieur (par exemple les tronçons 24, 26, 28, 30) et le tuyau extérieur (par exemple les tronçons 23, 25, 27, 29) sont constitués par une combinaison de tronçons d'épaisseur variable, les parties médianes se trouvent respectivement dans les mêmes plans de section (intersection 21/22) du tuyau (figure 3).

5. Tuyau selon l'une quelconque des revendications 1 à 4, caractérisé en ce qu'un tronçon partiel (par exemple 16, 19 sur la figure 2; 19, 12 sur la figure 1) ayant une épaisseur de paroi maximale constante se trouve entre les tronçons d'épaisseur de paroi croissante et décroissante (par exemple 15 et 20 sur la figure 2, 9 et 11 sur la figure 1) du tuyau intérieur et/ou extérieur.

6. Tuyau selon l'une quelconque des revendications 1 à 5, caractérisé en ce que l'épaisseur de la paroi (par exemple sur les tronçons partiels 9 sur la figure 1, 15 sur la figure 2, 23,24 sur la figure 3), vu en coupe longitudinale du tuyau, varie de manière linéaire.

7. Tuyau selon l'une quelconque des revendications 1 à 5, caractérisé en ce que la variation de l'épaisseur de la paroi sur les tronçons, vu en coupe longitudinale du tuyau, s'étend selon une courbure variable approximativement en forme de S, en ce que la transition des tronçons dans les parties du tuyau disposées entre ces derniers est tangentielle, et en ce que la transition des tronçons dans les tronçons partiels d'épaisseur maximale constante existant le cas échéant, est également tangentielle.

8. Tuyau selon l'une quelconque des revendications 1 à 4, caractérisé en ce que la plus grande épaisseur de la paroi du tuyau intérieur ou extérieur (1a ou 1) est égale du double au triple de la plus petite épaisseur de paroi (figures 1, 2).

9. Tuyau selon la revendication 4, caractérisé en ce que la plus grande épaisseur de paroi du tuyau intérieur et du tuyau extérieur (1b, 2b) est égale de 1,5 à 2 fois la plus petite épaisseur de paroi (figure 3).

10. Tuyau selon la revendication 4, caractérisé en ce que les tronçons d'épaisseur de paroi variable du tuyau extérieur sont plus longs que les tronçons d'épaisseur variable du tuyau intérieur.

11. Tuyau selon la revendication 4, caractérisé en ce que les tronçons d'épaisseur de paroi variable du tuyau intérieur sont plus longs que les tronçons d'épaisseur variable du tuyau extérieur.

12. Pièce de tuyau exécutée à partir d'un tuyau souple selon les revendications 1 à 5, qui comporte sur deux tronçons voisins d'épaisseur de paroi variable des éléments de robinetterie à une extrémité, notamment un tuyau de douche, les tronçons partiels d'épaisseur de paroi constante étant séparés au centre, caractérisée en ce que le tronçon partiel séparé (par exemple 26 ou 30) d'épaisseur de paroi maximale constante du tuyau extérieur (2b) est plus long que les éléments de robinetterie (32 ou 37, 38).

13. Pièce de tuyau, notamment tuyau de douche selon la revendication 12, caractérisée en ce que les tronçons partiels (par exemple 9, 15, 24 ou 11, 20, 27, 28) d'épaisseur croissante ou décroissante sont de 3 à 10 cm de long.

14. Procédé de fabrication d'un tuyau selon l'une quelconque des revendications 1 à 11, comprenant successivement l'extrusion du tuyau intérieur l'extraction du tuyau intérieur extrudé de l'extrudeuse sur une ligne de fabrication, l'enroulement d'au moins un renfort hélicoïdal autour du tuyau intérieur extrudé ou la pose d'au moins une entretoise sur le tuyau intérieur extrudé, l'extrusion du tuyau extérieur sur le tuyau intérieur entouré d'un renfort hélicoïdal ou muni d'une entretoise, l'extraction et l'enroulement du tuyau entouré d'un renfort hélicoïdal et enveloppé par le tuyau de raccordement, caractérisé en ce que pour une vitesse d'extraction constante la vitesse d'extrusion du tuyau intérieur et/ou du tuyau extérieur est accrue successivement de manière constante à des intervalles prédéterminés, le cas échéant maintenue constante à une valeur relativement élevée et finalement réduite progressivement jusqu'à la valeur de départ.

15. Procédé de fabrication d'un tuyau selon l'une quelconque des revendications 1 à 11 comprenant successivement l'extrusion du tuyau intérieur, l'extraction du tuyau intérieur extrudé d'une extrudeuse par une ligne de fabrication, l'enroulement autour du tuyau intérieur extrudé d'au moins un renfort hélicoïdal ou la pose d'au moins une entretoise sur le tuyau intérieur extrudé, l'extrusion du tuyau extérieur sur le tuyau intérieur entouré d'un renfort hélicoïdal ou muni d'une entretoise, l'extraction et l'enroulement du tuyau entouré d'un renfort hélicoïdal et enveloppé par le tuyau de raccordement, caractérisé en ce que pour des vitesses d'extrusion constante du tuyau intérieur et du tuyau extérieur la vitesse d'extraction du tuyau intérieur et du tuyau extérieur ainsi que la vitesse d'enroulement est réduite séquentiellement de manière continue, le cas échéant maintenue constante à une valeur relativement faible et finalement portée à la valeur de départ.

16. Procédé selon l'une des revendications 13 ou 14, caractérisé en ce que le tuyau intérieur est extrudé sur un mandrin.

Fig.1

Fig.2

Fig.3

Fig.5

0118613

Fig. 4